# EUROPEAN PATENT APPLICATION

(11) **EP 1 014 127 A2**
(43) Date of publication of application: **28.06.2000**
(21) Application number: 99310228.4
(22) Date of filing: 17.12.1999
(51) Int. Cl.: G02B 6/38

(54) **Permanent ferrule housing assembly**

(30) Priority: 18.12.1998 US 216756
(71) Applicant: Siecor Operations, LLC, Hickory, NC 28603-0489 (US)
(72) Inventor: Childers, Darrell R., Hickory, NC 28601 (US); Laws, Timothy S., Hickory, NC 28601 (US)
(74) Representative: Bubb, Antony John Allen

(57) **Abstract**

A permanent assembly has in a housing (12), two mated, tuned ferrules (16, 18) end to end in a sleeve (24), the ferrules are biased against one another by a spring member (30) to ensure contact of the ferrule faces (32, 34). The ferrules (16, 18) are attached to optical fibers (26, 28), one being a single mode and one a multi-mode, and strength members (36, 38) associated with the optical fibers (26, 28) are secured to the assembly. A heat shrink cover (52) is secured over the assembly.

## Description

The present invention is directed to an assembly that permanently houses two mated, tuned ferrules. Specifically, the assembly houses two ferrules, one attached to a single mode optical fiber and one attached to a multi-mode optical fiber. The ferrules are mated, taking the eccentricities of the ferrules into account, so that the desired amount of light passes from the single mode fiber to the multi-mode fiber. Typically, an assembly containing such a splice between single and multi-mode fibers occurs in a conditioning patch cord and eliminates Differential Mode Delay effects. Heretofore, no permanent assembly has been known that allows for the permanent mating of the tuned ferrules. Prior attempts of permanently mating the ferrules have failed, due to ferrules separating during thermal cycling, or a lack of adequate tensile strength of the mating point. Thus, there is a need for a permanent ferrule assembly housing that achieves these benefits.

Among the objects of the present invention is to provide a permanent ferrule assembly housing that maintains the integrity of the mating point of the mated ferrules.

Other objects and advantages of the present invention will become apparent from the following detailed description when viewed in conjunction with the accompanying drawings, which set forth certain embodiments of the invention. The objects and advantages of the invention will be realized and attained by means of the elements and combinations particularly pointed out in the appended claims.

To achieve the objects and in accordance with the purposes of the invention as embodied and broadly described herein, the invention comprises a fiber optic ferrule assembly for permanently housing two mated, tuned ferrules, the ferrules joined end to end in a sleeve, comprising an elongated housing sized to receive the two mated, tuned ferrules and sleeve therein, a ferrule holder attached to each ferrule, and a biasing member engaging a first ferrule holder to bias the two ferrules against one another.

To achieve the objects and in accordance with the purposes of the invention as embodied and broadly described herein, the invention also comprises a fiber optic ferrule assembly for permanently housing two mated ferrules, the ferrules joined end to end in a sleeve, comprising an elongated housing sized to receive the two mated ferrules and sleeve therein, the housing having a first opening at a first end sized to receive an optical fiber secured to a first ferrule and a second opening at a second end sized to receive the two mated ferrules, an end cap securable to the second end and defining a passageway therethrough for receiving an optical fiber secured to the second ferrule, a ferrule holder attached to each ferrule, and a biasing member interacting with the first ferrule holder and the housing to bias the two ferrules against one another.

To achieve the objects and in accordance with the purposes of the invention as embodied and broadly described herein, the invention also comprises a method of permanently housing two mated, tuned ferrules in assembly comprising the steps of inserting two ferrules into opposite ends of a sleeve member, each of the ferrules being attached to an optical fiber, orienting the ferrules in the sleeve to achieve a predetermined transmittance of light from one optical fiber to the other, and sliding a first portion of a housing along one of the optical fibers and over at least a portion of the mated ferrules, sliding a second portion of the housing along the other optical fibers to engage the first portion of the housing.

It is to be understood that both the foregoing general description and the following detailed description are exemplary and explanatory only and are not restrictive of the invention as claimed.

The accompanying drawings, which are incorporated in and constitute a part of this specification, illustrate several embodiments of the invention and, together with the description, serve to explain the principles of the invention.

### Brief Description of the Drawings

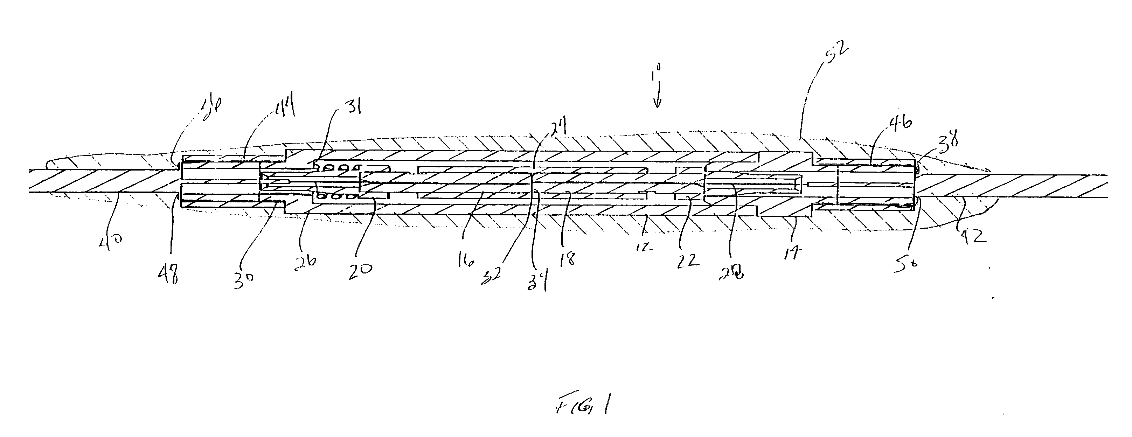

Figure 1 is cross-sectional view of a permanent ferrule housing assembly according to the present invention; and
Figure 2 is an exploded view thereof.

A ferrule assembly **10** according to the present invention preferably has a front portion or housing **12** and a second portion or end cap **14**. The assembly **10** houses two ferrules **16,18**, each ferrule being secured within its own ferrule holder **20,22**. The ferrules are inserted into a sleeve **24** to keep the optical fibers **26,28** secured in the ferrules **16,18** aligned. A spring **30**, mounted over one of the ferrule holders **20** biases the ferrules against the end cap **14** using a shoulder **31** on the inside of housing **12** and keeps the faces **32,34** of the ferrules in contact. The housing **12** and end cap **14** are preferably cylindrical in shape and have an inner diameter that is slightly larger than the ferrule holders and sleeve, but could also be other shapes, such as rectangular (preferable if used for multi-fiber connections), so long as the contained components have sufficient clearance. Additionally, while one of the portions of the assembly **10** is shown to be much longer than the other, the housing **12** and end cap **14** may be of any relative length, including the same length.

To add to the integrity of the assembly, the strength members **36,38** from each of the fiber optic cables **40,42** are secured to each end **48,50** of the assembly **10** by crimp bands **44,46**. After the end cap **14** is secured to housing **12** with the ferrules **16,18** in place, the strength members **36,38** are secured to the end portions **48,50** of the assembly **10** by crimp bands **44,46**, respectively. The end portions **48,50** have a reduced outer diameter relative to the housing **12** and the end cap **14.**

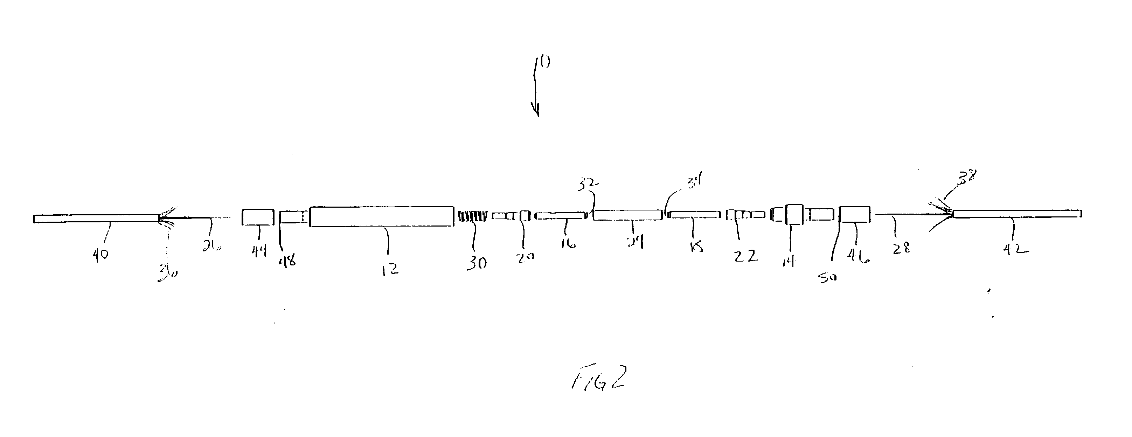

The method for assembling assembly **10** will now be described with reference to Fig. 2. A first fiber optic cable **40** has a first crimp band **44**, housing **12**, and spring **30** placed over the end of the optical cable to be joined in the assembly **10**. Fiber optic cable **40** could have either a single or multi-mode optical fiber therein. The optical fiber **26** has already been or will then be exposed from cable **40** as in known in the art A ferrule holder **20** and ferrule **16** are secured on the end of the optical fiber **26** as is also known in the art. The same procedure occurs for a second fiber optic cable **42** with crimp band **46** and end cap **14**. The optical fiber cable **42** has the opposite type of optical fiber from optical fiber cable **40**. Thus, if the optical fiber **26** in cable **40** is a single mode fiber, then the optical fiber **28** in cable **42** would be a multi-mode fiber, and vice versa. Ferrule holder **22** and ferrule **18** are then secured on the optical fiber **28**.

The ferrules can then be mated in sleeve **24** in one of two different ways. In the first method, the ferrules **16,18** are inserted into the sleeve **24** and the multi-mode fiber is attached to a light source. (Once installed, the light path is typically from the single mode fiber to the multi-mode fiber. However, the light path is the opposite during the tuning.) The light passing out of the single mode fiber on the other side of the mated ferrules is measured, and the ferrules are tuned (turned relative to one another) based upon the passage of light, or the power ratio measurement. By turning the ferrules relative to one another, a specific relationship of the eccentricities (and therefore the offset of the centers of the optical fibers) of the ferrules can be achieved, thereby allowing a specified amount of light to pass from the single mode fiber to the multi-mode fiber in the conditioning patch cord.

In the second method, the eccentricities of the ferrules are determined. Once the eccentricities are determined, a mark is made on the ferrule or ferrule holder. For example, a mark may be made directly on the ferrule, or the ferrule may be mounted into a ferrule holder having a key that indicates the direction of the ferrule's eccentricity. Therefore, when the ferrules are inserted into the sleeve and the markers are aligned in a specific orientation, the ferrules can be properly aligned without the need to measure the light transmission through the fibers.

The fit between the end cap **14** and the housing **12** is very tight, so the end cap **14** is preferably inserted into the housing **12** using a pneumatic press, although an appropriate hand press could also be used. The tight fit of the end cap **14** into the housing **12** adds to the strength and performance of the assembly **10.** To further increase the strength and performance of the assembly **10**, epoxy or some other bonding substance can be used in the seal between the end cap **14** and housing **12.** Alternatively, the end cap **14** and housing **12** could be so configured that one part screws into the other, rather than the press fit of the embodiment shown. Other variations that are not shown are also possible. For example, the end cap could have flexible tabs that engaged holes or depressions in the housing. The cap and housing be configured to allow a ring or pin to be inserted through the cap and housing to hold the assembly together.

The strength members **36,38** of the fiber optic cables are then secured to the assembly **10** as described above with crimp bands **44,46**. Finally, a heat shrink cover **52** with an adhesive coating on its inside surface is then placed and secured over the assembly **10**. An alternative to securing the strength members **36,38** with the crimp bands **44,46**, is to insert the strength members **36,38** between the housing **12** and the heat shrink cover **52**. The strength members **36,38** would then be secured to the assembly **10** when the heat shrink cover **52** is secured.

It should be noted that idea of a permanent assembly as used herein means that the mating of the two fibers and ferrules is not designed to be changed. Obviously, the assembly could be opened and the ferrules remated, but one would have to most likely destroy the assembly to do so. There are other well-known connections of optical fibers that are intended to be connected and reconnected any number of times. However, those types of connections are not intended to be included or incorporated by this assembly.

## Claims

1. A fiber optic ferrule assembly for permanently housing two mated, tuned ferrules, the ferrules joined end to end in a sleeve, comprising:
an elongated housing sized to receive the two mated, tuned ferrules and sleeve therein;
a ferrule holder attached to each ferrule; and
a biasing member engaging a first ferrule holder to bias the two ferrules against one another.

2. The fiber optic ferrule assembly of claim 1, wherein the elongated housing comprises:
a first portion having a first opening at a first end sized to receive a first optical fiber and a second opening at a second end sized to receive the two mated ferrules; and
a second portion securable to the second end of the first portion and defining a passageway therethrough for receiving a second optical fiber.

3. The fiber optic ferrule assembly of claim 2, wherein the second portion is an end cap, and the end cap and the first end of the first portion each have a crimp band to secure strength members associated with the optical fibers to the assembly.

4. The fiber optic ferrule assembly of claim 3, wherein the end cap is configured to be press fit into the second end.

5. The fiber optic ferrule assembly of claim 3, wherein the end cap is configured to be screwed into the second end.

6. The fiber optic ferrule assembly of claim 3, wherein the end cap is secured to the cylindrical housing with epoxy.

7. The fiber optic ferrule assembly of claim 3, wherein the end cap is configured to be snapped into the second end.

8. The fiber optic ferrule assembly of any one of Claims 1-7, further comprising a shrinkable member disposed around the housing.

9. The fiber optic ferrule assembly of any one of Claims 1-8, wherein the biasing member comprises a spring.

10. The fiber optic ferrule assembly of Claim 2 or any one of Claims 3-9 as appended thereto, wherein the first optical fiber is one of a single-mode or multi-mode optical fiber, and the second optical fiber is the other optical fiber.

11. The fiber optic ferrule assembly of any one of Claims 1-10, wherein the elongated housing comprises:
a first portion having a first opening at a first end sized to receive a first optical fiber and a second opening at a second end sized to receive at least a portion of one of the two mated ferrules; and
a second portion having a first opening at a first end sized to receive a second optical fiber and a second opening at a second end, the second opening of the second portion securable to the second end of the first portion and sized to receive at least a portion of one of the ferrules.
wherein the first portion and the second portion are of about equal lengths.
